# EUROPÄISCHE PATENTANMELDUNG

(11) **EP 0 595 217 A1**
(43) Veröffentlichungstag der Anmeldung: **04.05.1994**
(21) Anmeldenummer: 93117136.7
(22) Anmeldetag: 22.10.1993
(51) Int. Cl.: C10M 175/00, B01J 39/04

(54) **Verfahren zur Wiederaufbereitung von Hydraulikflüssigkeiten auf der Basis von Glykolen**

(30) Priorität: 28.10.1992 DE 4236322
(71) Anmelder: HOECHST AKTIENGESELLSCHAFT, D-65926 Frankfurt am Main (DE)
(72) Erfinder: Hettwer, Werner, D-84524 Neuötting (DE); Pulletz, Knud, D-84543 Winhöring (DE)

(57) **Zusammenfassung**

Das erfindungsgemäße Verfahren ist vor allem geeignet, gebrauchte und gealtere Glykol-Wasser-Hydraulikflüssigkeiten aufzubereiten. In einem ersten Verfahrensschritt wird die aufzubereitende mehr oder weniger braungefärbte Flüssigkeit einem Abtrennprozeß unterzogen zur Abtrennung der ungelösten festen und flüssigen Komponenten. Die so behandelte Flüssigkeit wird dann mit einem Anionenaustauscher oder einem Kationenaustauscher oder mit einer Kombination von Anionenaustauscher und Kationenaustauscher in Kontakt gebracht zur Abtrennung der gelösten störenden Komponenten. Die so erhaltene Glykol-Wasser-Lösung ist farblos bis leicht gelbgefärbt und kann dem ursprünglichen oder einem anderen Verwendungszweck wiederzugeführt werden. Im Falle von Verlusten an Glykol, Wasser und/oder Additiven im Zusammenhang mit der Aufarbeitung wird man die Verlustmengen wieder ersetzen. Das beschriebene Verfahren stellt also eine einfache und wirtschaftliche Methode zur Wiederaufbereitung von Hydraulikflüssigkeiten auf der Basis von Glykolen dar.

## Beschreibung

Die Erfindung betrifft ein Verfahren zur Wiederaufbereitung von Hydraulikflüssigkeiten auf der Basis von Glykolen, wodurch ihre ursprünglichen Eigenschaften wiederhergestellt und damit ihre Wiederverwendung erreicht wird.

Hydraulische Flüssigkeiten auf der Basis von Glykolen sind insbesondere Glykol-Wasser-Mischungen. Solche Mischungen zählen bekanntlich zu den schwerentflammbaren Hydraulikflüssigkeiten der Gruppe HFC [in dieser Bezeichnung steht "H" für Hydraulikflüssigkeit, "F" für Fire Resistant und "C" weist darauf hin, daß die Flüssigkeit zur Gruppe C der schwerentflammbaren Hydraulikflüssigkeiten gehört (vergleich zum Beispiel Deutsche Industrie Norm - DIN 51 502)]. HFC-Flüssigkeiten werden vor allem dort eingesetzt, wo eine relativ hohe Schwerentflammbarkeit gefordert wird. So werden sie zum Beispiel als Kraftübertragungsflüssigkeiten in brandgefährdeten Bereichen wie im Untertagebau zur Kohlegewinnung, in Druckgußmaschinen, in Hüttenwerken und dergleichen eingesetzt.

Die HFC-Hydraulikflüssigkeiten bestehen im einzelnen bekanntlich aus einer additivhaltigen wäßrigen Monomer- und/oder Polymerlösung mit mindestens 35 Gew.-% Wasser, wobei die Monomer- und Polymerprodukte vorzugsweise Glykole und Polyglykole sind. Die in Rede stehenden Hydraulikflüssigkeiten in Form von Glykol-Wasser-Mischungen (Lösungen) bestehen demnach im allgemeinen im wesentlichen aus 35 bis 50 Gew.-Teilen Wasser, 50 bis 65 Gew.-Teilen Glykol und Polyglykol sowie 0,5 bis 5 Gew.-Teilen Additiven. Die Glykole sind vorzugsweise Mono-, Di-, Tri- und Tetraethylenglykol und/oder Mono-, Di-, Tri- und Tetrapropylenglykol. Die Polyglykole (Verdickungsmittel) sind vorzugsweise höhermolekulare Ethylen/Propylen-Mischpolyglykole (das Molekulargewicht liegt im allgemeinen bei 8 000 bis 30 000). Die Additive sind die für Glykol-Wasser-Mischungen üblichen Verschleißinhibitoren, Antioxidantien, Korrosionsinhibitoren und dergleichen.

Es versteht sich von selbst, daß die Hydraulikflüssigkeiten im Laufe ihres Einsatzes altern, was schon äußerlich am Übergang von farblos oder gelb (ursprüngliche Farbe) zu mehr oder weniger braungefärbt ersichtlich ist. Die Alterung resultiert vor allem aus dem Abbau (Oxidation, Hydrolyse, thermische Spaltung und dergleichen) von Glykol, Polyglykol und Additiven und führt zu festen und flüssigen, löslichen und unlöslichen Abbauprodukten in einer jeweils mehr oder weniger großen Menge. Die Abbauprodukte können untereinander oder mit Glykol, Polyglykol, Wasser und/oder den Additiven weitere Reaktionen eingehen, die wiederum zu störenden Verbindungen führen. Es versteht sich ferner von selbst, daß eine gealterte Hydraulikflüssigkeit früher oder später durch eine neue (frische) ersetzt werden muß. Daraus ergibt sich das Problem der Entsorgung von gebrauchten und gealterten Hydraulikflüssigkeiten. Eine besonders vorteilhafte Lösung des Problems wäre mit einem Verfahren erreicht, mit dem gealterte Glykol-Wasser-Flüssigkeiten derart aufbereitet werden könnten, daß sie im wesentlichen wieder die ursprünglichen Eigenschaften aufweisen und wie neubereitete Flüssigkeiten einsetzbar sind. Ein solches Verfahren wird mit der vorliegenden Erfindung zur Verfügung gestellt.

Das erfindungsgemäße Verfahren zur Wiederaufbereitung von Hydraulikflüssigkeiten auf der Basis von Glykolen ist dadurch gekennzeichnet, daß man die aufzubereitende Hydraulikflüssigkeit
a) zunächst einem Abtrennprozeß unterzieht zur Abtrennung der ungelösten festen und flüssigen Komponenten in der Hydraulikflüssigkeit und
b) die im Schritt a) erhaltene Flüssigkeit mit einem Anionenaustauscher oder einem Kationenaustauscher oder mit einem Anionenaustauscher und einem Kationenaustauscher in Kontakt bringt zur Abtrennung der im wesentlichen gelösten störenden Komponenten, worauf man
c) die gereinigte Flüssigkeit durch Abtrennen vom Ionenaustauscher erhält.

Erfindungsgemäß werden also von der aufzubereitenden Hydraulikflüssigkeit zunächst die störenden ungelösten Bestandteile abgetrennt. Dies kann oft schon einfach durch Absetzenlassen erreicht werden. Die in ungelöster Form vorliegenden flüssigen und festen Komponenten wird man bevorzugt durch Zentrifugieren, Membranfiltration und/oder Filtration mit Hilfe anderer zweckmäßiger Filtermaterialien abtrennen. Diese Abtrennprozesse sind deshalb bevorzugt, weil damit eine vollständige Entfernung der ungelösten Bestandteile erreicht wird. Der Schritt a) wird vorzugsweise bei Raumtemperatur und Atmosphärendruck durchgeführt. Die so gereinigte Hydraulikflüssigkeit enthält noch (wie auch ihr noch immer mehr oder weniger braunes und gegebenenfalls trübes Aussehen zeigt) eine Reihe weiterer störender Komponenten, die im wesentlichen in gelöster Form vorliegen und ebenfalls aus Abbauprodukten, Reaktionsprodukten, Reaktionsaddukten und dergleichen bestehen. Zur Entfernung dieser störenden Komponenten wird die Flüssigkeit erfindungsgemäß einem Ionenaustausch unterzogen, indem sie mit einem Anionenaustauscher, einem Kationenaustauscher oder mit einer Kombination aus Anionenaustauscher und Kationenaustauscher behandelt wird. Eine bevorzugte Art der Behandlung oder des Inkontaktbringens der Flüssigkeit mit dem oder den Ionenaustauscher(n) ist jene, bei der die Ionenaustauscher in Form eines Bettes (auch Kolonne oder Säule genannt) vorliegen und die Flüssigkeit durch das Austauschbett hindurchgeschickt und am Ende des Bettes die gereinigte Flüssigkeit aufgefangen wird. Im Falle einer Kombination von einem Anionenaustauscher und einem Kationenaustauscher wird klarerweise der Auslauf aus dem ersten noch durch den zweiten Ionenaustauscher geschickt und am Ende dieses Bettes die gereinigte Flüssigkeit aufgefangen. In analoger Weise wird vorgegangen, wenn mehr als zwei Ionenaustauscher verwendet werden.

Nach einer bevorzugten Ausführungsform des erfindungsgemäßen Verfahrens wird die im Schritt a) erhaltene Glykol-Wasser-Mischung zur Abtrennung der weiteren störenden Komponenten mit einem Anionenaustauscher in Kontakt gebracht, vorzugsweise mit einem schwachbasischen Anionenaustauscher. Nach einer weiteren bevorzugten Ausführungsform des erfindungsgemäßen Verfahrens wird die im Schritt a) erhaltene Flüssigkeit zuerst mit einem Kationenaustauscher, vorzugsweise mit einem starksauren Kationenaustauscher, und anschließend mit einem schwachbasischen Anionenaustauscher in Kontakt gebracht. Hier wird also die im Schritt a) erhaltene Flüssigkeit zunächst mit einem vorzugsweise starksauren Kationenaustauscher und die vom Kationenaustauscher abgetrennte Flüssigkeit noch mit einem schwachbasischen Anionenaustauscher behandelt. Die Behandlung der im Schritt a) erhaltenen Flüssigkeit, das heißt die zweite Reinigungsstufe, wird im allgemeinen ebenfalls bei Raumtemperatur durchgeführt. Hier können aber auch höhere Temperaturen vorteilhaft sein. So liegt die Temperatur bei der Behandlung der Flüssigkeit mit dem oder den Ionenaustauscher(n) im allgemeinen bei 15 bis 50 °C, vorzugsweise bei 15 bis 30 °C. Diese Behandlung wird man ferner je nach gewünschter Durchflußgeschwindigkeit durch das Ionenaustauscherbett bei Atmosphärendruck, mit einem Überdruck (im allgemeinen 2 bis 10 bar) oder mit einem mehr oder weniger großen Unterdruck durchführen. Wenn Flüssigkeiten aufzubereiten sind, die weniger als 35 bis 40 Gew.-% Wasser enthalten, Gewichtsprozente bezogen auf das Gewicht der aufzubereitenden Flüssigkeit, kann es zweckmäßig sein, die Wassermenge durch Zugabe von Wasser auf mindestens 35 Gew.-% einzustellen, vorzugsweise auf 35 bis 45 Gew.-%, weil verdünntere Lösungen klarerweise besser fließen und damit die Durchführung des beschriebenen Abtrennprozesses und Ionenaustausches erleichtern. Was die Menge an Ionenaustauscher pro Liter aufzubereitender Hydraulikflüssigkeit, die Durchflußgeschwindigkeit durch das Austauscherbett und dergleichen betrifft, können diese Daten der Spezifikation des verwendeten Ionenaustauschers entnommen oder in einfachen Vorversuchen festgestellt werden. Im Spezifikationsblatt des verwendeten Ionenaustauschers sind ferner neben Kapazität, Schichthöhe, Beladungsgeschwindigkeit und dergleichen auch zum Beispiel die Struktur des Ionenaustauschers (gelförmig oder porös), das Schüttgewicht, die Korngröße, der pH-Wert (starksauer, schwachsauer, starkbasisch, schwachbasisch) und dergleichen angegeben. Beim erfindungsgemäßen Verfahren können Ionenaustauscher mit gelförmiger oder mehr oder weniger poröser Struktur verwendet werden, wobei solche mit gelförmiger oder makroporöser Struktur bevorzugt sind.

Der Aufbau des Ionenaustauschers bezüglich Grundgerüst und Ankergruppe ist für das erfindungsgemäße Verfahren nicht kritisch. Es ist lediglich erforderlich, daß die Ankergruppe den angegebenen sauren oder basischen Charakter liefert. Im Handel sind zahlreiche Anionen- und Kationenaustauscher mit Spezifikationsblatt erhältlich, die für das erfindungsgemäße Verfahren geeignet sind. Beispiele für Grundgerüste sind Polystyrol, Polyacrylat, Copolymere aus Styrol und Acrylat, Styrol und Divinylbenzol und dergleichen. Beispiele für starksaure und schwachsaure Ankergruppen sind Sulfonsäure und Phosphonsäure (das sind starksaure Gruppen) sowie Carbonsäure (schwachsauer). Beispiele für starkbasische und schwachbasische Ankergruppen sind primäres, sekundäres und tertiäres Amin (das sind schwachbasische Gruppen) und quaternäres Amin (starkbasisch). All diese Ionenaustauscher-Typen sind, wie oben erwähnt, im Handel erhältlich und es kann anhand der Spezifikation das für den erfindungsgemäßen Ionenaustausch gewünschte Austauscherharz ausgewählt werden.

Die nach der Ionenaustauscherbehandlung erhaltene Glykol-Wasser-Lösung ist klar und farblos (wasserhell) oder höchstens leicht gelbgefärbt. Sie kann unter Umständen ohne weiteres wieder zum gleichen oder einem anderen Zweck eingesetzt werden. Durch den erfindungsgemäßen Aufbereitungsprozeß entstehen häufig Verluste an Glykol, Polyglykol, Wasser und/oder Additiven. In diesen Fällen wird man eine den Verlusten entsprechende Menge der einzelnen Komponenten in die erhaltene Glykol-Wasser-Lösung einmischen, um die ursprünglichen physikalischen und chemischen Eigenschaften wiederherzustellen. Das erfindungsgemäße Verfahren stellt also eine einfache und sehr wirtschaftliche Arbeitsweise dar, gebrauchte und gealterte Hydraulikflüssigkeiten auf der Basis von Glykolen aufzubereiten und in neue (frische) Flüssigkeiten überzuführen.

Die Erfindung wird nun an Beispielen noch näher erläutert (die in den Beispielen angegebenen Prozentwerte sind Gewichtsprozente).

### Beispiel 1

Die aufzubereitende dunkelbraungefärbte HFC-Altflüssigkeit enthielt circa 0,3 % feste und < 0,1 % flüssige (spezifisch leichtere) unlösliche Fremdstoffe und 0,25 % gelöste oxidative Abbauprodukte sowie 60 % Wasser, 15 % Monoethylenglykol, 10 % Dipropylenglykol und 10 % Polyalkylenglykole (Polymerverdicker). Der pH-Wert war 8,6. Der Korrosionsschutz gemäß 6. Luxemburger Bericht und der Verschleißschutz nach Deutscher Industrie Norm DIN 51 389 (Vickerspumpentest) waren nicht mehr erfüllt.

Die Aufbereitung von 10 l dieser schwerentflammbaren Hydraulikflüssigkeit erfolgte in der Weise, daß die nichtgelösten flüssigen und festen Fremdstoffe bei Raumtemperatur mittels Filzmaterial und dann mittels einem 0,01-mm-Feinfilter (wie sie in der Hydraulik allgemein verwendet werden) abgetrennt wurden. Nachfolgend wurde das weitgehend klare, dunkelbraungefärbte Filtrat ebenfalls bei Raumtemperatur in einem Zeitraum von 2 Stunden über einen starksauren, makroporösen Kationenaustauscher (Polystyrol mit Sulfonsäuregruppen) und anschließend über einen schwachbasischen, makroporösen Anionenaustauscher (Polystyrol mit tertiären Amingruppen) geleitet. Die beiden Austauscherharze waren jeweils in einer Glassäule von 80 mm Durchmesser und 750 mm Länge. Es wurden je 1,5 l der Kationenaustausch- und Anionenaustausch-Harze verwendet. Zwecks besserer Durchlaufgeschwindigkeit wurde am Auslauf jeder Säule ein Unterdruck von 150 mbar eingestellt. Der Ablauf vom Anionenaustauscher, das ist die aufbereitete HFC-Flüssigkeit, war klar und nur noch sehr schwach gelbgefärbt. In die so erhaltene Glykol-Wasser-Lösung wurden zur Einstellung der geforderten Werte Glykol, Polymerverdicker und Additive eingemischt. Die Prüfung auf Korrosions- und Verschleißschutz gemäß 6. Luxemburger Bericht ergab, daß die geforderten Werte wieder vorlagen.

### Beispiel 2

Die aufzubereitende dunkelbraungefärbte HFC-Altflüssigkeit enthielt circa 0,1 % feste und 0,1 % flüssige (spezifisch leichtere) unlösliche Fremdstoffe und 0,2 % gelöste oxidative Abbauprodukte sowie 21 % Wasser, 38 % Monoethylenglykol, 12 % Diethylenglykol und 26 % Polymerverdicker. Der pH-Wert war 8,0. Der Korrosionsschutz gemäß 6. Luxemburger Bericht und der Verschleißschutz nach DIN 51 389 waren nicht mehr erfüllt. Dieser aufzubereitenden Hydraulikflüssigkeit wurde Wasser zugesetzt, um die Wassermenge auf 40 % zu bringen und so die Filtration und den Durchfluß durch die Ionentauscher mit dieser Flüssigkeit zu erleichtern.

Die Aufbereitung von 10 l Flüssigkeit erfolgte bezüglich Entfernung der nichtgelösten flüssigen und festen Fremdstoffe wie im Beispiel 1. Das weitgehend klare, dunkelbraungefärbte Filtrat wurde dann in einem Zeitraum von 2 Stunden über einen starksauren, gelförmigen Kationenaustauscher (Polystyrol mit Sulfonsäuregruppen) und anschließend über einen schwachsauren, makroporösen Anionenaustauscher (Polystyrol mit tertiären Amingruppen) geleitet. Die beiden Ionenaustauschersäulen und die Durchlaufgeschwindigkeit waren wie im Beispiel 1. Der Ablauf vom Anionenaustauscher, das ist die aufbereitete HFC-Flüssigkeit, war klar und nur noch sehr schwach gelbgefärbt. In die so erhaltene Glykol-Wasser-Lösung wurden zur Einstellung der ursprünglichen Werte bezüglich Korrosions- und Verschleißschutz wiederum Glykol, Polymerverdicker und Additive eingemischt.

### Beispiel 3

Eine weitere dunkelbraungefärbte HFC-Altflüssigkeit mit pH-Wert = 8,2 und mit 0,1 % flüssigen und 0,4 % festen unlöslichen Fremdstoffen sowie 0,18 % gelösten Fremdstoffen (die übrige Zusammensetzung war wie bei Beispiel 1) wurde wie in Beispiel 1 filtriert. Das Filtrat wurde nur durch den in Beispiel 1 angegebenen schwachbasischen, makroporösen Anionenaustauscher geleitet, das heißt kontinuierlich aufgegeben und durchfließen gelassen. Die am Auslauf der Anionenaustauschersäule erhaltene aufbereitete Glykol-Wasser-Lösung war wiederum klar und nur noch schwach gelbgefärbt (sie kann also solche oder nach Einstellung der ursprünglichen Eigenschaftwerte einem Verwendungszweck zugeführt werden).

## Patentansprüche

1. Verfahren zur Wiederaufbereitung von Hydraulikflüssigkeiten auf der Basis von Glykolen, dadurch gekennzeichnet, daß man die aufzubereitende Hydraulikflüssigkeit
a) zunächst einem Abtrennprozeß unterzieht zur Abtrennung der ungelösten festen und flüssigen Komponenten in der Hydraulikflüssigkeit und
b) die im Schritt a) erhaltene Flüssigkeit mit einem Anionenaustauscher oder einem Kationenaustauscher oder mit einem Anionenaustauscher und einem Kationenaustauscher in Kontakt bringt zur Abtrennung der im wesentlichen gelösten störenden Komponenten, worauf man
c) die gereinigte Flüssigkeit durch Abtrennen vom Ionenaustauscher erhält.

2. Verfahren nach Anspruch 1, wobei die Abtrennung der ungelösten festen und flüssigen Komponenten in der Hydraulikflüssigkeit im Schritt a) durch Zentrifugieren oder Filtrieren oder durch eine Kombination von Zentrifugieren und Filtrieren der Hydraulikflüssigkeit durchgeführt wird.

3. Verfahren nach Anspruch 1 oder 2, wobei die im Schritt a) erhaltene Flüssigkeit mit einem Anionenaustauscher in Kontakt gebracht wird.

4. Verfahren nach Anspruch 1 oder 2, wobei die im Schritt a) erhaltene Flüssigkeit mit einem schwachbasischen Anionenaustauscher in Kontakt gebracht wird.

5. Verfahren nach Anspruch 1 oder 2, wobei die im Schritt a) erhaltene Flüssigkeit zuerst mit einem Kationenaustauscher und dann mit einem schwachbasischen Anionenaustauscher in Kontakt gebracht wird.

6. Verfahren nach Anspruch 1 oder 2, wobei die im Schritt a) erhaltene Flüssigkeit zuerst mit einem starksauren Kationenaustauscher und dann mit einem schwachbasischen Anionenaustauscher in Kontakt gebracht wird.

7. Verfahren nach einem oder mehreren der Ansprüche 1 bis 6, wobei gelförmige oder makroporöse Ionenaustauscher eingesetzt werden.

8. Verfahren nach einem oder mehreren der Ansprüche 1 bis 7, wobei das Inkontaktbringen der aufzubereitenden Hydraulikflüssigkeit mit dem oder den Ionenaustauscher(n) in der Weise durchgeführt wird, daß man die Hydraulikflüssigkeit durch den oder die in Bettform angeordneten Ionenaustauscher(n) schickt.

9. Verfahren nach einem oder mehreren der Ansprüche 1 bis 8, wobei der Ionenaustausch bei einer Temperatur von 15 bis 50 °C durchgeführt wird.

10. Verfahren nach einem oder mehreren der Ansprüche 1 bis 8, wobei der Ionenaustausch bei einer Temperatur von 15 bis 50 °C und bei Atmosphärendruck oder Überdruck oder Unterdruck durchgeführt wird.
